Europäisches Patentamt

European Patent Office

Office européen des brevets

(11) Numéro de publication : **0 515 640 B1**

(12) **FASCICULE DE BREVET EUROPEEN**

(45) Date de publication du fascicule du brevet :
**30.03.94 Bulletin 94/13**

(21) Numéro de dépôt : **92901516.2**

(22) Date de dépôt : **04.12.91**

(86) Numéro de dépôt international :
**PCT/FR91/00969**

(87) Numéro de publication internationale :
**WO 92/11086 09.07.92 Gazette 92/17**

(51) Int. Cl.⁵ : **B01J 23/38,** B01J 23/89,
B01J 23/40

(54) PROCEDE DE PREPARATION DE CATALYSEURS MULTIMETALLIQUES.

(30) Priorité : **19.12.90 FR 9015750**

(43) Date de publication de la demande :
**02.12.92 Bulletin 92/49**

(45) Mention de la délivrance du brevet :
**30.03.94 Bulletin 94/13**

(84) Etats contractants désignés :
**BE DE ES GB IT SE**

(56) Documents cités :
**EP-A- 0 306 945
DE-B- 1 289 059
FR-A- 2 030 338**

(73) Titulaire : **INSTITUT FRANCAIS DU PETROLE
4, avenue de Bois Préau
F-92502 Rueil-Malmaison (FR)**

(72) Inventeur : **MARECOT, Patrice
Le Peu
F-86130 S.-Georges-les-Baillargeaux (FR)**
Inventeur : **BARBIER, Jacques
Les Fousserettes, Montamise
F-86360 Chasseneuil-du-Poitu (FR)**
Inventeur : **MABILON, Gil
30, rue de l'Egalité
F-78240 Carrieres-sur-Seine (FR)**
Inventeur : **DURAND, Daniel
17, rue Michelet
F-92500 Rueil-Malmaison (FR)**
Inventeur : **PRIGENT, Michel
11, rue des Marronniers
F-92500 Rueil-Malmaison (FR)**

EP 0 515 640 B1

Jouve, 18, rue Saint-Denis, 75001 PARIS

## Description

La présente invention concerne un procédé de préparation de catalyseurs multimétalliques.

Les catalyseurs multimétalliques sont fréquemment utilisés en raffinage, pétrochimie, chimie fine, combustion et post-combustion catalytiques pour accélerer des réactions chimiques. Ils présentent habituellement sur les catalyseurs monométalliques l'avantage d'une meilleure sélectivité, comme celà est illustré dans Hydrocarbon Technology, 1990, 12, 20-43, par l'amélioration de la sélectivité en formation de toluène lors du réformage catalytique de n-heptane sur un catalyseur à base de platine et d'iridium comparée à la même réaction sur un catalyseur à base de platine seul. En combustion ou post-combustion catalytiques les catalyseurs à base de platine et de palladium, ou à base de platine et de rhodium sont préférés aux catalyseurs à base de platine seul car ils élargissent le domaine de conditions opératoires où ces catalyseurs sont utilisables.

Un grand état de division des particules métalliques est nécessaire pour que les catalyseurs métalliques présentent une bonne activité catalytique. Le principe le plus utilisé pour obtenir ce grand état de division consiste à déposer les métaux sur un support poreux. Les supports poreux présentent une surface spécifique élevée sur laquelle les métaux peuvent être déposés sous forme de très petites particules. L'obtention de catalyseurs multimétalliques est réalisée selon le même principe.

Les supports poreux utilisés sont choisis en fonction de leur texture. leur résistance au frittage à haute température, et leurs propriétés chimiques. Les plus utilisés sont les alumines, la silice, les silice-alumines, les zéolithes, les oxydes de titane, de cérium, de chrome, de zirconium, les oxydes mixtes d'aluminium et de magnésium, d'aluminium et de nickel, les carbures, les nitrures, les borures. les charbons actifs.

L'imprégnation des métaux sur les supports poreux peut être réalisée selon plusieurs techniques bien connues de l'homme de l'art. Ch. Marcilly et J. P. Franck ont présenté une liste de telles techniques (Revue Institut Français du Pétrole, 1984, 3, 337-364). Les plus utilisées sont l'imprégnation par échange et l'imprégnation à sec. La première technique met en oeuvre les propriétés d'échange cationique ou anionique des supports poreux. Elle consiste à immerger le support poreux dans une solution aqueuse ou organique de précurseurs métalliques à pH contrôlé. Les précurseurs métalliques ioniques en solution s'échangent avec des sites superficiels du support. La deuxième technique consiste à préparer une solution aqueuse ou organique de précurseurs métalliques et à imprégner le support poreux par un volume de solution égal à son volume poreux.

Ces techniques sont applicables non seulement à la préparation de catalyseurs monométalliques mais aussi à la préparation de catalyseurs multimétalliques. Dans ce cas, les solutions de précurseurs métalliques mises en oeuvre contiennent simultanément les précurseurs des différents métaux à imprégner. La technique est alors appelée technique de co-imprégnation.

La demanderesse, cherchant à améliorer les propriétés catalytiques de catalyseurs multimétalliques, a trouvé que l'on pouvait préparer des catalyseurs par un procédé comprenant deux étapes d'imprégnation, et comprenant en outre au moins un traitement en milieu réducteur après la première étape d'imprégnation, ce procédé conduisant à une augmentation de la stabilité des performances catalytiques.

La présente invention concerne en effet un procédé de préparation de catalyseurs multimétalliques dont la phase active comprend au moins deux métaux A et B appartenant aux groupes VIII et I-B du tableau périodique, déposés sur un support poreux, et caractérisé en ce que :

- dans une première étape, on imprègne au moins une partie du support poreux par au moins un précurseur de métal A ;
- dans une deuxième étape, on effectue une activation sous atmosphère neutre ou oxydante à une température comprise entre 120 et 800°C, suivie d'une activation dans un milieu réducteur à une température comprise entre 0 et 800°C ;
- dans une troisième étape, on imprègne par au moins un précurseur de métal B au moins une partie du support au moins en partie déjà imprégnée par le précurseur du métal A ; et
- dans une quatrième étape, on effectue une activation sous atmosphère neutre ou oxydante à une température comprise entre 120 et 800°C, éventuellement suivie d'une activation sous milieu réducteur entre 0 et 800°C.

Pour préparer les catalyseurs selon le procédé de l'invention, on peut choisir le support poreux en fonction de l'application visée, dans le groupe préalablement mentionné. Parmi les alumines, on peut citer l'alumine rô, l'alumine gamma, l'alumine éta, l'alumine delta, l'alumine théta, l'alumine kappa, l'alumine alpha et leurs mélanges. La stabilité de la texture de ces alumines peut être améliorée par ajout de certains éléments, tels que les éléments des lanthanides, en particulier le lanthane, le néodyme ou le cérium, des métaux alcalins, tels que le potassium. des métaux alcalino-terreux, tels que le magnésium, le baryum, des métaux de transition, tels que le titane, le zirconium, des éléments des groupes III-A ou IV-A du tableau périodique, tels que le gallium ou le silicium. Ces éléments peuvent être ajoutés purs ou en mélange. Les alumines pures ou modifiées par des stabilisants sont largement utilisées comme supports des catalyseurs d'hydrogénation, de déshydrogénation ou de réformage dans les procédés de raffinage et de pétrochimie. Elles sont aussi utilisées comme support des catalyseurs de combustion ou de post-combustion. Dans ce cas, elles sont fréquemment associées à d'autres supports poreux tels que l'oxyde de cérium, l'oxyde de zirconium, l'oxyde de lanthane, l'oxyde de néodyme et leurs mélanges, ainsi que les oxydes mixtes résultant de leurs combinaisons.

D'autres supports poreux sont connus de l'homme de l'art, par exemple les zéolithes, les silice-alumines, les argiles, la silice, les oxydes de titane ou de zirconium, les oxydes mixtes tels que l'aluminate de lanthane, l'aluminate de baryum ou l'aluminate de magnésium, les carbures tels que le carbure de tungstène, le carbure de silicium ou le carbure de titane, les nitrures tels que le nitrure de silicium ou le nitrure de titane, les charbons actifs, et leurs mélanges; ces supports peuvent convenir à l'application des catalyseurs pour des réactions de raffinage, pétrochimie, chimie fine, combustion et post-combustion catalytiques.

Tous ces supports poreux peuvent être utilisés purs ou en mélange.

Selon le procédé de l'invention, le support poreux peut être sous forme de poudre, de billes, de bâtonnets obtenus par exemple par extrusion ou pastillage. On peut également mettre en oeuvre des supports poreux constitués de un ou plusieurs oxydes recouvrant un substrat céramique ou métallique. Ledit substrat peut être sous forme de structure céramique en nid d'abeille comprenant des canaux. La matière principale peut être la cordièrite, la mullite, l'alumine, la zircone, le titanate de baryum, le carbure de silicium, le nitrure de silicium. Le dépôt du support poreux sur le substrat peut avantageusement être réalisé selon le procédé décrit dans FR-A-2 512 004 ; le diamètre médian des poudres mises en oeuvre étant en général compris entre 1 et 100 microns, plus particulièrement entre 2 et 50 microns. Le substrat peut aussi être constitué par un empilement de fibres ou un enroulement de feuillards en alliages métalliques. Ces alliages métalliques doivent présenter des propriétés réfractaires. Ils peuvent par exemple être composés de fer, de chrome, d'aluminium et de cérium ou d'yttrium tels que l'acier Gilphal 135 de la société Imphy. Le dépôt du support poreux sur ces substrats métalliques peut aussi être réalisé selon le procédé décrit dans FR-A-2 512 004. Dans ce cas, le substrat est, selon une mise en oeuvre préférée du procédé, préalablement soumis à un traitement oxydant à une température comprise entre 700 et 1200°C, de préférence entre 800 et 1000°C.

Selon le procédé de l'invention, lorsque le support poreux consiste en un dépôt sur un substrat céramique ou métallique, l'imprégnation des précurseurs des métaux A et B peut être effectuée avant le dépôt du support poreux sur le substrat, ou après ce dépôt, ou l'imprégnation du précurseur du métal A peut être effectuée avant le dépôt, celle du précurseur du métal B étant effectuée après le dépôt.

Les métaux des groupes VIII et I-B du tableau périodique sont le fer, le cobalt, le nickel, le ruthénium, le rhodium, le palladium, l'osmium, l'iridium, le platine, le cuivre, l'argent et l'or.

Les précurseurs des métaux des groupes VIII et I-B susceptibles d'être mis en oeuvre selon le procédé de l'invention, sont les composés solubles en milieu inorganique, en particulier aqueux, ou organique. On peut citer de manière non limitative, les chlorures, tels que le chlorure ferreux, le chlorure ferrique, le chlorure de rhodium, le chlorure de palladium, le dichlorure d'iridium, le tétrachlorure d'iridium ou le chlorure de ruthénium, les acides chlorés, tels que l'acide chloroplatinique ou l'acide chloroiridique, les acides non chlorés, tels que l'acide hydroxyplatinique, les nitrates, tels que le nitrate de nickel, le nitrate de rhodium ou le nitrate de palladium, les complexes nitrosés, tels que le dinitroso-diammino platine ou le dinitroso-diammino palladium, les complexes amminés, tels que le chlorure de nickel hexammine, le nitrate de palladium tétrammine ou le chlorure de chloro-rhodium pentammine, les sels d'acides carboxyliques, tels que l'acétate de palladium, les complexes organométalliques, tels que l'acétylacétonate de palladium ou l'acétyl-acétonate de rhodium.

Selon le procédé de l'invention, dans une première étape le précurseur du métal A est mis en solution dans un solvant approprié, organique ou inorganique. Tout ou partie du support poreux est imprégné par la solution ainsi préparée. L'imprégnation peut être effectuée avec un volume de solution compris entre le dixième du volume poreux du support, et cent fois le volume poreux du support, de préférence entre le cinquième et dix fois le volume poreux du support. L'homme de l'art adapte le procédé à la morphologie du support poreux, selon qu'il est sous forme de poudre, de billes, de bâtonnets obtenus par extrusion ou pastillage, ou de couche fine à la surface d'un substrat monolithique en céramique ou en métal.

La concentration du précurseur du métal A dans la solution est choisie telle que, à la fin des quatre étapes du procédé, la concentration en métal A dans le catalyseur multimétallique, exprimée en poids par rapport au support poreux, est comprise entre 10 ppm et 10 %, de préférence entre 50 ppm et 2 %.

La solution du précurseur du métal A peut, si nécessaire, contenir des ions hydrogène, ammonium, chlorures, nitrates, ou autres, destinés à modifier les conditions d'acido-basicité du milieu, et/ou modifier le nombre de sites d'échange du support poreux.

La température d'imprégnation du précurseur du métal A est en général comprise entre 0 et 100°C, de préférence entre 10 et 40°C. La durée de l'imprégnation est en général comprise entre 1 minute et 10 heures, de préférence entre 2 minutes et 4 heures.

Selon le procédé de l'invention, dans une deuxième étape, on active thermiquement le support poreux à une température comprise entre 120 et 800°C. L'atmosphère de traitement est neutre ou oxydante. Elle peut, par exemple, être constituée d'azote, d'argon, d'air, d'oxygène, de gaz de combustion de mélanges d'air et d'hydrocarbures de richesse inférieure ou égale à 1, et de leurs mélanges. La durée du traitement est généralement comprise entre 30 minutes et 30 heures, de préférence entre 1 et 6 heures. Cette deuxième étape se poursuit par un traitement dans un milieu réducteur à une température comprise entre 0 et 800°C. ce milieu réducteur contient des composés purs ou des mélanges de composés tels que, par exemple, l'hydrogène, le monoxyde de carbone, les hydrocarbures aliphatiques ou aromatiques, saturés ou insaturés, tels que le méthane, l'éthane, le propane, le butane, l'éthylène, le propylène, l'acétylène, le benzène, ou le toluène, les acides carboxyliques, tels que l'acide formique ou l'acide acétique, les aldéhydes, tels que le formaldéhyde ou l'acétaldéhyde, les alcools, tels que le méthanol, l'éthanol ou le propanol, les polyols, tels que l'éthylène glycol ou le propylène glycol, les amines, tels que la méthylamine ou l'éthylamine, l'urée, l'acide isocyanique, l'hydroxylamine, l'hydrazine, les gaz de combustion de mélange d'air et d'hydrocarbures de richesse supérieure à 1. Dans la pratique, ces composés réducteurs peuvent être mélangés à des composés inertes tels que, par exemple, l'azote ou l'argon, qui ne modifient pas le caractère réducteur des composés précédemment mentionnés. La durée de ce traitement est généralement comprise entre 30 minutes et 30 heures, de préférence entre 1 et 6 heures.

Selon un mode préféré de mise en oeuvre du procédé de l'invention, dans la deuxième étape, le traitement thermique en milieu réducteur à 0 - 800°C est suivi par un traitement par au moins un composé donneur d'hydrogène à une température inférieure à 200°C. A titre d'exemples, les composés donneurs d'hydrogène peuvent être choisis parmi l'hydrogène, l'ammoniac, les hydrocarbures aliphatiques, saturés ou insaturés, et les hydrocarbures aromatiques.

Selon le procédé de l'invention, dans une troisième étape, la partie du support poreux imprégné par le précurseur du métal A est imprégnée par le précurseur du métal B, d'une manière similaire à l'imprégnation du précurseur du métal A.

Comme pour l'imprégnation du précurseur du métal A, le volume de solution peut être compris entre le dixième et cent fois le volume poreux du support, de préférence entre le cinquième et dix fois le volume poreux du support.

La concentration du précurseur du métal B dans la solution est choisie telle que, à la fin de la quatrième étape de la préparation, la concentration en métal B dans le catalyseur multimétallique, exprimée en poids par rapport au support poreux, est comprise entre 10 ppm et 10 %, de préférence entre 50 ppm et 2 %.

La solution du précurseur du métal B peut, si nécessaire, contenir des ions hydrogène, ammonium, chlorures, nitrates, ou autres.

La température d'imprégnation du précurseur du métal B est en général comprise entre 0 et 100°C, de préférence entre 10 et 40°C. La durée de l'imprégnation est en général comprise entre 1 minute et 10 heures, de préférence entre 2 minutes et heures.

L'imprégnation du précurseur du métal B est effectuée sous atmosphère neutre, oxydante ou réductrice.

Dans le cas où l'activation de la deuxième étape a été suivie par un traitement par un composé donneur d'hydrogène à une température inférieure à 200°C, l'imprégnation du précurseur du métal B peut être effectuée soit sous la même atmosphère de composé donneur d'hydrogène, soit sous une atmosphère neutre, contenant par exemple de l'azote, de l'argon ou leurs mélanges.

Selon le procédé de l'invention, dans une quatrième étape, on effectue une activation du support poreux, imprégné par les précurseurs des métaux A et B, en atmosphère neutre ou oxydante à une température comprise entre 120 et 800°C, éventuellement suivie d'une activation dans un milieu réducteur à une température comprise entre 0 et 800°C.

Le procédé de préparation de catalyseurs multimétalliques tel qu'il a été décrit ci-dessus peut s'appliquer à la préparation de divers catalyseurs bimétalliques tels par exemple que ceux qui sont utilisés pour catalyser notamment l'hydrogénation sélective des acétyléniques et des di-oléfines en mono-oléfines (les couples de métaux étant entre autres palladium - platine, palladium-rhodium, palladium-argent, palladium-or ou palladium-nickel) le réformage catalytique des coupes naphta et la déshydrogénation des paraffines en oléfines (les couples de métaux étant entre autres platine-iridium ou platine-rhodium), la combustion d'hydrocarbures dans l'air en particulier pour la production d'énergie dans les moteurs à turbine (les couples de métaux étant entre autres platinepalladium, platine-rhodium ou platine-cobalt), ainsi que pour catalyser la conversion des polluants dans les gaz d'échappement des moteurs à combustion interne, lesdits gaz d'échappement contenant notamment du monoxyde de carbone, des hydrocarbures imbrûlés, des oxydes d'azote et des suies.

Dans les catalyseurs utilisés dans ce dernier cas, le métal A est plus particulièrement le platine ou le palladium et le métal B, différent du métal A, est plus particulièrement le platine, le palladium ou le rhodium.

Les catalyseurs obtenus selon le procédé de l'invention se distinguent des catalyseurs de l'art antérieur par une meilleure stabilité, en particulier lorsque la température à laquelle ils sont susceptibles d'opérer est élevée.

Cette amélioration de la stabilité des performances catalytiques est mise en évidence par des tests comparatifs de catalyseurs préparés selon l'invention ou selon l'art antérieur et soumis à des conditions de traitement thermique sévère. De plus, l'activité des catalyseurs métalliques est généralement fonction de l'état de division des métaux. cet état de division appelé dispersion, est caractérisable par des techniques de chimisorption. Par exemple, la chimisorption du monoxyde de carbone ou de l'hydrogène, ou le titrage par de l'oxygène de l'hydrogène chimisorbé, peuvent être utilisés pour caractériser la dispersion des métaux. Les catalyseurs préparés selon le procédé de l'invention, se caractérisent, après traitement thermique sévère, par une plus forte quantité de monoxyde de carbone chimisorbé.

Ainsi, par exemple, pour les catalyseurs dont le métal A est le platine et le métal B le rhodium, la dispersion de ces métaux peut être mise en évidence par exemple par chimisorption du monoxyde de carbone; elle se traduit sur les spectres infra-rouge par une bande caractéristique à environ 2084 cm$^{-1}$.

D'autre part, les catalyseurs multimétalliques préparés selon le procédé de l'invention se différencient des catalyseurs de comparaison par une modification de l'interaction entre les métaux.

Elle peut être mise en évidence par les courbes de réduction en température programmée des catalyseurs, sous hydrogène ou sous monoxyde de carbone, ou par les fréquences d'absorption infra-rouge du monoxyde de carbone chimisorbé sur ces catalyseurs.

Les courbes de réduction en température programmée des catalyseurs préparés par co-imprégnation des métaux présentant généralement un seul pic correspondant à la réduction simultanée des deux métaux. Dans le cas d'un catalyseur où les métaux sont le platine et le rhodium, le maximum du pic est obtenu par une température de environ 210°C. Pour les catalyseurs préparés selon le procédé de l'invention la courbe de réduction présentent deux pics. Ils sont obtenus pour des températures de environ 200 et 260°C pour un catalyseur où le métal A est le platine et le métal B le rhodium.

Ces caractéristiques peuvent permettre de distinguer un catalyseur à base de platine et de rhodium préparé selon le procédé de l'invention d'un catalyseur contenant les mêmes métaux obtenu par un procédé différent, par exemple par co-imprégnation.

Les exemples ci-après illustrent l'invention sans en limiter la portée. Les exemples 1, 3, 7 et 8 sont donnés à titre de comparaison.

EXEMPLE 1 (comparatif) : Préparation d'un catalyseur platine-palladium (I) par co-imprégnation.

On dispose 100 g d'une alumine Rhône-Poulenc en billes, de surface spécifique 110 m$^2$/g et de volume poreux 1,10 cm$^3$/g, dans un erlenmeyer de 1 l. On prépare 110 ml d'une solution d'acide chloroplatinique et de chlorure de palladium contenant 1 g de platine et 0,5 g de palladium. cette solution est coulée en 20 minutes sur les billes d'alumine, l'erlenmeyer étant maintenu sous agitation. Les billes sont ensuite introduites dans une étuve à 120°C pendant 2 heures. Elles sont ensuite introduites dans un four sous air dont la température est programmée pour monter de 120 à 500°C en 2 heures, puis rester en palier à 500°C pendant 2 heures.

Le catalyseur (I) ainsi obtenu contient, en poids rapporté au support, 1 % de platine et 0,5 % de palladium.

EXEMPLE 2 : Préparation d'un catalyseur platine-palladium (II) selon l'invention.

Comme dans l'exemple 1, dans une première étape, on introduit 100 g d'une alumine Rhône-Poulenc en billes, de surface spécifique 110 cm$^2$/g et de volume poreux 1,10 cm$^3$/g, dans un erlenmeyer de 1 l. On prépare 110 ml d'une solution d'acide chloroplatinique contenant 1 g de platine. On coule cette solution en 20 minutes sur les billes d'alumine, l'erlenmeyer étant maintenu sous agitation. Dans une deuxième étape, les billes sont placées dans une étuve à 120°C pendant 2 heures. A l'issue de ce traitement elles sont placées à l'air dans un four et subissent une montée en température de 120 à 500°C en 2 heures, puis restent à 500°C pendant 2 heures. Elles sont ensuite refroidies jusqu'à 40°C. Les billes sont alors balayées par un mélange réducteur contenant 5 % en volume d'hydrogène dans de l'azote. Elles subissent alors sous ce mélange gazeux une montée en température jusqu'à 500°C à la vitesse de 3°C/minute, puis restent à cette température pendant 2 heures. Elles subissent ensuite un refroidissement sous azote jusqu'à 25°C.

Dans une troisième étape, les billes sont introduites sous air dans un erlenmeyer. On prépare 110 ml d'une solution de chlorure de palladium contenant 0,5 g de palladium. cette solution est coulée sur les billes dans l'erlenmeyer maintenu sous agitation.

Dans une quatrième étape, les billes sont placées dans une étuve à 120°C pendant 2 heures, puis dans un four où elles subissent une montée en température de 120 à 500°C en 2 heures. Elles sont maintenues à 500°C pendant 2 heures.

Le catalyseur (II) ainsi obtenu contient, en poids rapporté au support, 1 % de platine et 0,5 % de palladium.

EXEMPLE 3 (comparatif) : Préparation d'un catalyseur platine-rhodium (III) par co-imprégnation.

On mélange 1000 g d'alumine en poudre de surface spécifique 110 m²/g (diamètre médian des grains : 8 microns) à 200 g d'oxyde de cérium en poudre de surface spécifique 130 m²/g (diamètre médian des grains : 15 microns). Le mélange est alors introduit dans 2800 ml d'une solution diluée d'acide nitrique dans l'eau de pH égal à 4.

La suspension ainsi obtenue est utilisée pour enduire un monolithe de 904 ml, en cordiérite, de la société corning, présentant une structure en nid d'abeille comportant 62 canaux par centimètre carré. L'enduction est réalisée par immersion du monolithe dans la suspension suivie d'un séchage à 120°C pendant 2 heures et d'une calcination de 2 heures à 500°C. Une deuxième enduction dans les mêmes conditions suivie d'un séchage à 120°C et d'une calcination à 500°C permet d'obtenir un dépôt de support poreux sur le substrat monolithique égal à 105 g d'alumine et 21 g d'oxyde de cérium.

Le monolithe enduit ainsi obtenu est mis en contact pendant 30 minutes avec 200 ml d'une solution d'acide chloroplatinique et de trichlorure de rhodium contenant 1 g de platine et 0,2 g de rhodium.

Le monolithe imprégné est placé dans une étuve à 120°C pendant 3 heures puis placé, à l'air, dans un four. Il subit alors une montée en température en 2 heures jusqu'à 500°C, puis reste 2 heures à cette température.

Le catalyseur (III) ainsi préparé contient, exprimé en poids par rapport au support poreux, 0,794 % de platine et 0,159 % de rhodium.

EXEMPLE 4 : Préparation d'un catalyseur palladium-rhodium (IV) selon l'invention.

On enduit un substrat monolithique par 105 g d'alumine et 21 g d'oxyde de cérium selon la procédure décrite dans l'exemple 3.

Dans une première étape, on imprègne ce monolithe par 200 ml d'une solution d'acide chloroplatinique contenant 1 g de platine.

Dans une deuxième étape, on place le monolithe imprégné dans une étuve à 120°C pendant 3 heures. A l'issue de ce traitement, il est placé à l'air dans un four et subit une montée en température de 120 à 500°C en 2 heures, puis reste à 500°C pendant 2 heures. Il est ensuite refroidi jusqu'à 40°C. Le monolithe est alors balayé par un mélange réducteur contenant 5 % en volume d'hydrogène dans de l'azote. Il subit alors sous ce mélange gazeux une montée en température jusqu'à 500°C à la vitesse de 3°C/minute, puis reste à cette température pendant 2 heures. Il est ensuite refroidi jusqu'à 25°C sous azote, puis placé sous air.

Dans une troisième étape, on imprègne le monolithe par 200 ml d'une solution de chlorure de rhodium contenant 0,5 g de rhodium.

Dans une quatrième étape, le monolithe est placé dans une étuve à 120°C pendant 2 heures, puis dans un four où il subit une montée en température de 120 à 500°C en 2 heures. Il est maintenu à 500°C pendant 2 heures.

Le catalyseur (IV) ainsi préparé contient en poids, exprimé par rapport au support poreux, 0,794 % de platine et 0,159 % de rhodium.

EXEMPLE 5 : Préparation d'un catalyseur platine-rhodium (V) selon l'invention.

On enduit un substrat monolithique par 105 g d'alumine et 21 g d'oxyde de cérium selon la procédure décrite dans l'exemple 3.

Dans une première étape, on imprègne ce monolithe par 200 ml d'une solution d'acide chloroplatinique contenant 1 g de platine.

Dans une deuxième étape, on place le monolithe imprégnée dans une étuve à 120°C pendant 3 heures. A l'issue de ce traitement il est placé à l'air, dans un four et subit une montée en température de 120 à 500°C en 2 heures, puis reste à 500°C pendant 2 heures. Il est ensuite refroidi jusqu'à 40°C. Le monolithe est alors balayé par un mélange réducteur contenant 5 % d'hydrogène dans de l'azote. Il subit alors sous ce mélange gazeux une montée en température jusqu'à 500°C en 2 heures, puis reste à cette température pendant 2 heures. Il est ensuite refroidi sous la même atmosphère jusqu'à 25°C, puis le mélange hydrogène-azote est remplacé par de l'azote pur.

Dans une troisième étape, on imprègne le monolithe, sous azote, par 200 ml d'une solution de chlorure de rhodium contenant 0,5 g de rhodium.

Dans une quatrième étape, le monolithe est placé dans une étuve à 120°C pendant 2 heures, puis dans un four où il subit une montée en température de 120 à 500°C en 2 heures. Il est maintenu à 500°C pendant 2 heures.

Le catalyseur (V) ainsi préparé contient en poids, exprimé par rapport au support poreux. 0,794 % de platine et 0,159 % de rhodium.

EXEMPLE 6 : Préparation d'un catalyseur platine-rhodium (VI) selon l'invention.

On mélange 1000 g d'alumine en poudre et 200 g d'oxyde de cérium en poudre comme dans l'exemple 3. Dans une première étape, on imprègne la poudre par 1100 ml d'une solution d'acide hexachloroplatinique contenant 9,528 g de platine.

Dans une deuxième étape, on sèche la poudre pendant 2 heures dans une étuve à 120°C, puis on la calcine dans un four par une montée programmée jusqu'à 500°C en 2 heures, suivie d'un traitement à 500°C pendant 2 heures. La poudre est ensuite refroidie jusqu'à 40°C, puis placée sous une atmosphère d'hydrogène à 5 % dans l'azote. La poudre subit ensuite une montée en température jusqu'à 500°C à la vitesse de 3°C/minute, puis reste à cette température pendant 2 heures. Elle est ensuite refroidie jusqu'à 25°C, puis placée sous air.

Dans une troisième étape, on imprègne la poudre, sous air, par 1100 ml d'une solution de trichlorure de rhodium contenant 1,906 g de rhodium.

Dans une quatrième étape, on sèche la poudre dans une étuve à 120°C pendant 2 heures. Puis on place la poudre dans un four et on la calcine sous air, par une montée en température en 2 heures jusqu'à 500°C, suivie d'un traitement à 500°C pendant 2 heures.

La poudre est alors mise en suspension dans 2800 ml d'une solution aqueuse d'acide nitrique à pH 4. cette suspension est utilisée pour enduire un monolithe en cordièrite de la société corning comportant 62 canaux par centimètre carré. La masse de support poreux déposé, hors le platine et le rhodium est de 126 g.

Le catalyseur (VII) ainsi préparé contient, en poids par rapport au support poreux, 0,794 % de platine et 0,159 % de rhodium.

EXEMPLE 7 (comparatif) : Préparation d'un catalyseur palladium-rhodium (VII) par co-imprégnation.

Comme dans l'exemple 3, on enduit un monolithe Corning de 904 ml par un support poreux constitué de 105 g d'alumine et 21 g d'oxyde de cérium.

Le monolithe enduit ainsi obtenu est mis en contact pendant 30 minutes avec 200 ml d'une solution de chlorure de palladium et de trichlorure de rhodium contenant 1 g de palladium et 0,2 g de rhodium.

Le monolithe imprégné est placé dans une étuve à 120°C pendant 3 heures puis placé, à l'air, dans un four. Il subit alors une montée en température en 2 heures jusqu'à 500°C, puis reste 2 heures à cette température.

Le catalyseur (VII) ainsi préparé contient, exprimé en poids par rapport au support poreux, 0,794 % de palladium et 0,159 % de rhodium.

EXEMPLE 8 (comparatif) : Préparation d'un catalyseur palladium-rhodium (VIII).

Comme dans l'exemple 3, on enduit un monolithe Corning de 904 ml par un support poreux constitué de 105 g d'alumine et 21 g d'oxyde de cérium.

Dans une première étape, le monolithe enduit ainsi obtenu est mis en contact pendant 30 minutes avec 200 ml d'une solution de chlorure de palladium contenant 1 g de palladium.

Dans une deuxième étape, le monolithe imprégné est placé dans une étuve à 120°C pendant 3 heures puis placé, à l'air, dans un four. Il subit alors une montée en température en 2 heures jusqu'à 500°C, puis reste 2 heures à cette température. Il subit ensuite un refroidissement sous air j'qu'à 25°C.

Dans une troisième étape, le monolithe est imprégné par 200 ml d'une solution de chlorure de rhodium contenant 0,2 g de rhodium.

Dans une quatrième étape, le monolithe est séché 2 heures dans une étuve à 120°C, puis placé dans un four, à l'air, où il subit une montée en température jusqu'à 500°C en 2 heures, puis un traitement isotherme à 500°C pendant 2 heures.

Le catalyseur (VIII) ainsi préparé contient, exprimé en poids par rapport au support poreux, 0,794 % de palladium et 0,159 % de rhodium.

EXEMPLE 9 : Préparation d'un catalyseur palladium-rhodium (IX) selon l'invention.

Comme dans l'exemple 3, on enduit un monolithe Corning de 904 ml par un support poreux constitué de 105 g d'alumine et 21 g d'oxyde de cérium.

Dans une première étape, le monolithe enduit ainsi obtenu est mis en contact pendant 30 minutes avec 200 ml d'une solution de chlorure de palladium contenant 1 g de palladium.

Dans une deuxième étape, le monolithe imprégné est placé dans une étuve à 120°C pendant 3 heures. A l'issue de ce traitement il est placé à l'air, dans un four et subit une montée en température de 120 à 500°C en 2 heures, puis restent à 500°C pendant 2 heures. Il est ensuite refroidi jusqu'à 40°C. Le monolithe est alors balayé par un mélange réducteur contenant 5 % d'hydrogène dans de l'azote. Il subit alors sous ce mélange gazeux une montée en température jusqu'à 500°C en 2 heures, puis reste à cette température pendant 2 heures. Il est ensuite refroidi sous la même atmosphère jusqu'à 25°C, puis le mélange hydrogène-azote est remplacé par de l'azote pur.

Dans une troisième étape, on imprègne le monolithe, sous azote, par 200 ml d'une solution de chlorure de rhodium contenant 0,2 g de rhodium.

Dans une quatrième étape, le monolithe est placé dans une étuve à 120°C pendant 2 heures, puis dans un four où il subit une montée en température de 120 à 500°C en 2 heures. Il est maintenu à 500°C pendant 2 heures.

Le catalyseur (IX) ainsi préparé contient, exprimé en poids par rapport au support poreux, 0,794 % de palladium et 0,159 % de rhodium.

EXEMPLE 10 : Activité des catalyseurs en oxydation.

Le procédé de l'invention ayant pour objet d'améliorer la stabilité des catalyseurs, les performances des catalyseurs I et II, préparés comme décrit respectivement dans les exemples 1 et 2, sont comparés après un traitement de calcination sous air à 900°C pendant 15 h.

Pour chaque catalyseur un échantillon cylindrique de 30 mm de diamètre et 76 mm de long prélevé et introduit dans une unité de test catalytique de laboratoire comportant un générateur de mélange gazeux, une zone de réaction et un dispositif d'analyse des effluents sortant du catalyseur.

Le générateur de mélange gazeux est constitué de régulateurs de débit massiques permettant de réguler des débits d'azote d'oxygène, de dioxyde de carbone, de monoxyde de carbone et de propane. De plus, une pompe permet d'injecter un débit contrôlé d'eau qui est vaporisée et mélangée aux autres gaz. La composition volumique du mélange gazeux est : 73,45 % d'azote, 10 % de dioxyde de carbone, 10 % de vapeur d'eau, 5 % d'oxygène, 1,5 % de monoxyde de carbone et 0,05 % de propane. Un tel mélange présente un caractère nettement oxydant, comme cela est le cas des gaz d'échappement des moteurs pauvres ou des moteurs Diesel.

La zone de réaction est constituée d'un tube en acier placé dans un four. Le tube contient le catalyseur qui est balayé par le mélange gazeux préparé dans le générateur de mélange précédemment décrit. La température du four est programmée pour monter linéairement de 150 à 600°C à la vitesse de 5°C/minute. La température des gaz est mesurée à 5 millimètres de la face d'entrée du catalyseur.

La concentration en monoxyde de carbone à la sortie du catalyseur est mesurée en continu à l'aide d'un analyseur infra-rouge. La concentration en propane est mesurée en continu à l'aide d'un détecteur à ionisation de flamme. La conversion du monoxyde de carbone est le rapport entre la diminution de la concentration au travers du catalyseur et la concentration en entrée du catalyseur. La conversion du propane est calculée selon le même formalisme appliqué aux concentrations en propane.

La conversion intégrale d'un polluant est le rapport exprimé en % entre l'intégrale de la courbe représentant la conversion de ce polluant en fonction de la température entre 200 et 550°C et l'intégrale qui résulterait d'une conversion totale dans le domaine de température considéré. Le tableau 1 ci-après rassemble les résultats obtenus avec les catalyseurs I et II en élimination du monoxyde de carbone (CO) et du propane ($C_3H_8$) dans un mélange gazeux à caractère oxydant.

## TABLEAU 1

| Référence du catalyseur | Conversion intégrale de CO (%) | Conversion intégrale de $C_3H_8$ (%) |
|:---:|:---:|:---:|
| I | 65 | 51 |
| II | 77 | 63 |

On peut constater que le catalyseur II préparé selon l'invention est nettement amélioré par rapport au catalyseur de comparaison I.

EXEMPLE 11 : Activité des catalyseurs en post combustion.

Les catalyseurs III à IX, préparés comme décrit respectivement dans les exemples 3 à 9, sont des catalyseurs de post-combustion des gaz d'échappement contenant du cérium et donc plus particulièrement utilisables pour la conversion des polluants contenus dans les gaz d'échappement des moteurs à combustion interne fonctionnant à la richesse moyenne de 1.

Afin de tester l'amélioration de stabilité associée à la préparation selon le procédé de l'invention les catalyseurs III à IX sont vieillis et testés sur un banc-moteur. Ce banc-moteur comporte un moteur quatre cylindres de 2200 cm$^3$ de cylindrée. Il fonctionne à la richesse A grâce à une injection électronique asservie à l'indication de richesse fournie par une sonde à oxygène placée sur la tubulure d'échappement. Il fonctionne avec un carburant répondant aux spécifications Eurosuper.

Les catalyseurs sont montés dans une enveloppe métalliques, et implantés sur la ligne d'échappement. Entre le collecteur d'échappement et le catalyseur est installé un système de régulation de la température des gaz d'échappement entre 150 et 600°C, utilisé uniquement dans la phase de test catalytique.

Dans la phase de vieillissement des catalyseurs le moteur fonctionne à un régime de 4000 tours par minute. La température des gaz d'échappement est alors de 850°C. Dans de telles conditions une durée de vieillissement de 200 heures permet de simuler un roulage de 80 000 km sur route en conditions normales.

Dans la phase de test catalytique. le moteur fonctionne à un régime de 2500 tours par minute. La température des gaz d'échappement est progressivement montée de 250 à 550°C grâce au régulateur de température.

La concentration en monoxyde de carbone avant et après passage sur le catalyseur est déterminé à l'aide d'un analyseur infra-rouge.

la concentration en oxyde d'azote avant et après le catalyseur est déterminée à l'aide d'un analyseur par chimiluminescence.

La concentration en hydrocarbures avant et après le catalyseur est déterminée à l'aide d'un détecteur à ionisation de flamme.

La conversion intégrale est mesurée entre 300 et 550°C.

Le tableau 2 ci-après rassemble les résultats obtenus en conversion du monoxyde de carbone (CO), des hydrocarbures (HC) et des oxydes d'azote (NO$_x$) avec les catalyseur III à IX.

## TABLEAU 2

| Référence du catalyseur | Conversion intégrale de CO % | Conversion intégrale de $C_3H_8$ (%) | Conversion intégrale des NO (%) |
|---|---|---|---|
| III | 58 | 62 | 42 |
| IV | 67 | 71 | 49 |
| V | 69 | 70 | 50 |
| VI | 66 | 69 | 49 |
| VII | 51 | 52 | 40 |
| VIII | 53 | 52 | 38 |
| IX | 60 | 59 | 50 |

Les catalyseurs IV, V, VI et IX se révèlent plus performants après un traitement sous conditions sévères que les catalyseurs comparatifs III, VII et VIII.

EXEMPLE 12 : Caractérisation des catalyseurs III et IV.

Les catalyseurs III et IV sont caractérisés par réduction en température programmée sous hydrogène et par analyse du spectre d'absorption infra-rouge après chimisorption de CO.

La réduction en température programmée est effectuée en introduisant un échantillon de catalyseur dans une cellule en quartz. Cette cellule est traversée par un courant d'azote contenant 5 % volumique d'hydrogène. La cellule est placée dans un four permettant d'effectuer une montée en température programmée depuis la température ambiante jusqu'à 800°C.

La consommation d'hydrogène par réduction du catalyseur est déterminée à l'aide d'un détecteur à catharomètre.

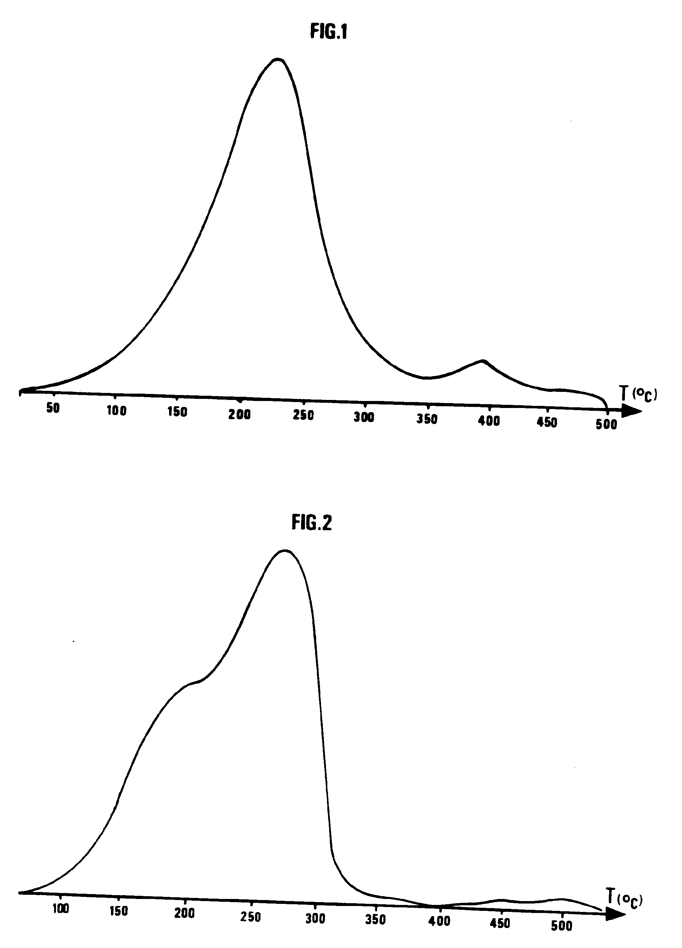

Les figures 1 et 2 représentent les courbes de réduction en température programmée des catalyseur III et IV. En abscisses sont portées les températures et en ordonnées une grandeur représentant le taux de conversion de l'hydrogène. Elles montrent que le catalyseur préparé selon l'invention se distingue nettement du catalyseur comparatif préparé par co-imprégnation ; la courbe de réduction comporte deux pics à environ 200 et 260°C (figure 2) contre un seul pic à 210°C, pour le catalyseur préparé par co-imprégnation (figure 1).

Pour l'analyse infra-rouge de la chimisorption de CO, les catalyseurs III et IV sont pressés sous forme de pastilles de 25 mm de diamètre pesant 15 mg. Ils sont placés dans une cellule de traitement et d'analyse qui permet de les traiter sous atmosphère contrôlée à des températures comprises entre l'ambiante et 600°C. Ils subissent ensuite une réduction sous hydrogène jusqu'à 500°C, puis, après refroidissement sous hélium jusqu'à la température ambiante, sont placés sous vide pendant 30 minutes. Le spectre d'absorption infra-rouge des catalyseurs III et IV est enregistré à l'aide d'un spectromètre infra-rouge à transformée de Fourier et constitue le spectre de référence. Les catalyseurs subissent alors une adsorption de CO par admission d'une quantité de CO telle que la pression de CO dans la cellule soit de 20 mbar. Après mise sous vide pendant 20 minutes. le spectre d'absorption infra-rouge des catalyseurs ayant chimisorbé CO est enregistré.

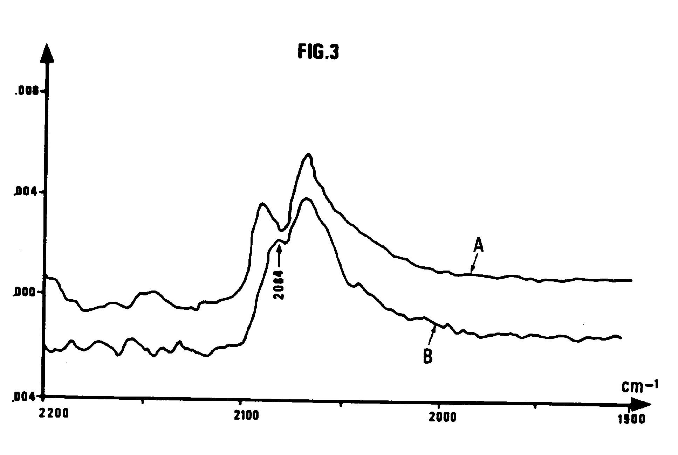

La figure 3 représente les différences entre les spectres des catalyseurs après chimisorption de CO et les spectres de référence avant chimisorption de CO, afin de mettre en évidence les bandes d'absorption dues à la chimisorption de CO. En abscisses sont portées les nombres d'onde en $cm^{-1}$ et en ordonnées les absorbances. Le spectre A correspond au catalyseur III et le spectre B correspond au catalyseur IV. Il apparaît nettement que les bandes d'absorption infra-rouge de CO sont différentes selon le procédé mis en oeuvre pour la préparation des catalyseurs.

## Revendications

1.  Procédé de fabrication d'un catalyseur multimétallique dont la phase active comprend au moins deux métaux A et B appartenant aux groupes VIII et IB du tableau périodique, déposés sur un support poreux, ledit procédé comprenant :
    - une première étape dans laquelle on imprègne au moins une partie du support poreux par au moins un précurseur de métal A;
    - une deuxième étape dans laquelle on effectue une activation en atmosphère neutre ou oxydante, à une température comprise entre 120°C et 800°C.
    - une troisième étape dans laquelle on imprègne par au moins un précurseur de métal B au moins une partie du support au moins en partie déjà imprégnée par ledit précurseur du métal A; et
    - une quatrième étape dans laquelle on effectue une activation en atmosphère neutre ou oxydante à une température comprise entre 120°C et 800°C.
    ledit procédé étant caractérisé en ce que l'activation en atmosphère neutre ou oxydante de la deuxième étape est suivie d'un traitement dans un milieu réducteur à une température comprise entre 0°C et 800°C.

2.  Procédé selon la revendication 1, caractérisé en ce que ledit milieu réducteur comprend au moins un composé choisi parmi : l'hydrogène, le monoxyde de carbone, les hydrocarbures aliphatiques ou aromatiques, saturés ou insaturés, les acides carboxyliques, les aldéhydes, les alcools, les polyols, les amines et les gaz de combustion de mélange air-hydrocarbures de richesse supérieure à 1.

3.  Procédé selon l'une des revendications 1 et 2, caractérisé en ce que, dans la deuxième étape, le traitement en milieu réducteur à 0-800°C est suivi par un traitement par au moins un composé donneur d'hydrogène à une température inférieure à 200°C.

4.  Procédé selon la revendication 3, caractérisé en ce que ledit composé donneur d'hydrogène est choisi parmi l'hydrogène, l'ammoniac, les hydrocarbures aliphatiques, saturés ou insaturés, et les hydrocarbures aromatiques.

5. Procédé selon l'une des revendications 1 à 4, caractérisé en ce que les précurseurs des métaux A et B sont mis en jeu en des proportions telles que lesdits métaux A et B soient présents dans le catalyseur chacun à une concentration, exprimée en poids par rapport au support poreux, de 10 ppm à 10 %.

6. Procédé selon l'une des revendications 1 à 5, caractérisé en ce que le support poreux comprend au moins une alumine.

7. Procédé selon les revendications 1 à 6, caractérisé en ce que ledit catalyseur comprend en outre un substrat sur lequel est déposé ledit support.

8. Procédé selon la revendication 7, caractérisé en ce que ledit substrat est un monolithe céramique ou métallique.

9. Procédé selon l'une des revendications 7 et 8, caractérisé en ce que ledit substrat est revêtu par le support poreux avant le dépôt sur celui-ci des métaux A et B.

10. Procédé selon l'une des revendications 7 et 8, caractérisé en ce que ledit substrat est revêtu par le support poreux après le dépôt sur celui-ci des métaux A et B.

11. Procédé selon l'une des revendications 7 et 8, caractérisé en ce que le métal A est déposé sur le support poreux, puis le substrat est revêtu par ledit support poreux et le métal B est déposé sur ledit support poreux ainsi mis en place.

12. Catalyseur multimétallique comprenant dans une phase active au moins un métal A et au moins un métal B choisis chacun dans le groupe VIII et IB du tableau périodique déposés sur un support poreux, caractérisé en ce qu'il est préparé par un procédé selon l'une des revendications 1 à 11.

13. Catalyseur selon la revendication 12, caractérisé en ce que chacun des métaux A et B est présent à une concentration, en poids par rapport au support poreux, de 10 ppm à 10 %.

14. Catalyseur selon la revendication 13, caractérisé en ce que ladite concentration est de 50 ppm à 2 %.

15. Catalyseur selon l'une des revendications 12 à 14, caractérisé en ce que ledit métal A est choisi entre le platine et le palladium et ledit métal B, différent dudit métal A est choisi entre le platine, le palladium et le rhodium.

16. Catalyseur selon la revendication 15, dont le métal A est le platine et le métal B le rhodium, caractérisé en ce que le diagramme de réduction en température programmée sous hydrogène présente deux maxima à environ 200 et 260°C, et le spectre infra-rouge après adsorption de monoxyde de carbone présente une bande à environ 2084 cm$^{-1}$.

17. Utilisation d'un catalyseur selon l'une des revendications 12 à 16, pour catalyser la conversion des polluants dans les gaz d'échappement des moteurs à combustion interne.

**Patentansprüche**

1. Verfahren zur Herstellung eines multimetallischen Katalysators, deren aktive Phase wenigstens zwei Metalle A und B, welche den Gruppen VIII und IB des Periodensystems angehören, umfaßt, welche auf einem porösen Träger niedergelegt sind, wobei das Verfahren umfaßt:
   - eine erste Stufe, in welcher man wenigstens einen Teil des porösen Trägers mit wenigstens einem Vorläufer des Metalles A imprägniert;
   - eine zweite Stufe, in welcher man eine Aktivierung in neutraler oder oxidierender Atmosphäre bei einer Temperatur, die zwischen 120°C und 800°C liegt, bewirkt;
   - eine dritte Stufe, in welcher man mit wenigstens einem Vorläufer des Metalles B wenigstens einen Teil des Trägers, der wenigstens teilweise schon mit dem Vorläufer des Metalles A imprägniert ist, imprägniert; und

- eine vierte Stufe, in welcher man eine Aktivierung in neutraler oder oxidierender Phase bei einer Temperatur, die zwischen 120°C und 800°C liegt, bewirkt;

wobei das Verfahren dadurch gekennzeichnet ist, daß die Aktivierung in neutraler oder oxidierender Atmosphäre der zweiten Stufe von einer Behandlung in einem reduzierenden Milieu bei einer Temperatur, die zwischen 0°C und 800°C liegt, gefolgt ist.

2. Verfahren gemäß Anspruch 1, dadurch **gekennzeichnet**, daß das reduzierende Milieu wenigstens eine Verbindung umfaßt, die ausgewählt ist unter: wasserstoff, Kohlermonoxid, gesättigten oder ungesättigten aliphatischen oder aromatischen Kohlenwasserstoffen, Carbonsauren, Aldehyden, Alkoholen, Polyolen, Aminen und Verbrennungsgasen der Mischung Luft-Kohlenwasserstoff eines Gehaltes über 1.

3. Verfahren gemäß einem der Ansprüche 1 und 2, dadurch **gekennzeichnet**, daß in der zweiten Stufe die Behandlung in reduzierendem Milieu bei 0 bis 800°C von einer Behandlung mit wenigstens einer wasserstoffdonator-Verbindung bei einer Temperatur unterhalb 200°C gefolgt ist.

4. Verfahren gemäß Anspruch 3, dadurch **gekennzeichnet**, daß die Wasserstoffdonator-Verbindung unter Wasserstoff, Ammoniak, gesättigten oder ungesättigten aliphatischen Kohlenwasserstoffen und aromatischen Kohlenwasserstoffen ausgewählt ist.

5. Verfahren gemäß einem der Ansprüche 1 bis 4, dadurch **gekennzeichnet**, daß die Vorläufer der Metalle A und B in Verhältnissen eingesetzt werden, in welchen die Metalle A und B im Katalysator, jedes in einer Konzentration, ausgedrückt in Gewichtsverhältnissen auf dem porösen Träger, von 10 ppm bis 10% anwesend sein soll.

6. Verfahren gemäß einem der Ansprüche 1 bis 5, dadurch **gekennzeichnet**, daß der poröse Träger wenigstens ein Aluminiumoxid umfaßt.

7. Verfahren gemäß den Ansprüchen 1 bis 6, dadurch **gekennzeichnet**, daß der Katalysator außerdem ein Substrat umfaßt, auf welchem der Träger niedergelegt ist.

8. Verfahren gemäß Anspruch 7, dadurch **gekennzeichnet**, daß das Substrat ein keramischer oder metallischer Monolith ist.

9. Verfahren gemäß einem der Ansprüche 7 und 8, dadurch **gekennzeichnet**, daß das Substrat mit dem porösen Träger vor dem Aufbringen der Metalle A und B auf diesem versehen wird.

10. Verfahren gemäß einem der Ansprüche 7 und 8, dadurch **gekennzeichnet**, daß das Substrat mit dem porösen Träger nach dem Aufbringen der Metalle A und B auf diesem versehen wird.

11. Verfahren gemäß einem der Ansprüche 7 und 8, dadurch **gekennzeichnet**, daß das Metall A auf dem porösen Träger aufgebracht wird, dann das Substrat mit dem porösen Träger versehen wird und das Metall B auf den so zusammengestellten porösen Träger aufgebracht wird.

12. Multimetallischer Katalysator, der in einer aktiven Phase wenigstens ein Metall A und wenigstens ein Metall B, wovon jedes aus der Gruppe VIII und IB des Periodensystems ausgewahlt ist, umfaßt auf einem porösen Träger niedergelegt, dadurch **gekennzeichnet**, daß er gemäß einem der Ansprüche 1 bis 11 hergestellt ist.

13. Katalysator gemäß Anspruch 12, dadurch **gekennzeichnet**, daß jedes der Metalle A und B in einer Konzentration, im Gewichtsverhältnis auf dem porösen Träger, von 10 ppm bis 10% anwesend ist.

14. Katalysator gemäß Anspruch 13, dadurch **gekennzeichnet**, daß die Konzentration 50 ppm bis 2% beträgt.

15. Katalysator gemäß einem der Ansprüche 12 bis 14, dadurch **gekennzeichnet**, daß das Metall A unter Platin und Palladium ausgewählt ist und das Metall B, verschieden vom Metall A, unter Platin, Palladium und Rhodium ausgewählt ist

16. Katalysator gemäß Anspruch 15, dessen Metall A Platin und dessen Metall B Rhodium ist, dadurch **gekennzeichnet**, daß das Reduktionsdiagramm bei programmierter Temperatur unter Wasserstoff zwei Maxima bei etwa 200 und 260°C zeigt und das Infrarotspektrum nach der Absorption von Kohlenstoffmonoxid eine Bande bei etwa 2084 cm⁻¹ aufweist.

17. Verwendung eines Katalysators gemäß einem der Ansprüche 12 bis 16, um die Umwandlung von durch innere Verbrennung in Abgasen erzeugte Schadstoffe zu katalysieren.

## Claims

1. A process for producing a multimetal catalyst in which the active phase comprises at least two metals A and B belonging to Groups VIII and IB of the periodic table, deposited on a porous carrier, said process comprising :
   - a first stage, in which at least part of the porous carrier is impregnated with at least one precursor of metal A ;
   - a second stage, in which activation is carried out in a neutral or oxidising atmosphere at a temperature for 120° to 800°C ;
   - a third stage, in which at least part of the carrier which is already at least partly impregnated with said precursor of the metal A is impregnated with at least one precursor of metal B ; and
   - a fourth stage, in which activation is carried out in a neutral or oxidising atmosphere at a temperature of 120° to 800°C ;
   
   Said process being characterised in that the second-stage activation in a neutral or oxidising atmosphere is followed by treatment in a reducing medium at a temperature from 0 to 800°C.

2. A process according to claim 1, characterised in that said reducing medium comprises at least on compound selected form hydrogen, carbon monoxide, saturated or unsaturated, aliphatic or aromatic hydrocarbons, carboxylic acids, aldehydes, alcohols polyols, amines and combustion gases from an air-hydrocarbon mixture at a ratio higher that 1:1.

3. A process according to one of claims 1 and 2, the second stage treatment in a reducing medium at 0 - 800°C is followed by treatment with at least one hydrogen donor compound at a temperature below 200°C.

4. A process according to claim 3, characterised in that said hydrogen donor compound is selected from hydrogen, ammonia, saturated or unsaturated, aliphatic hydrocarbons and aromatic hydrocarbons.

5. A process according to any of claims 1 to 4, that the precursors of metals A and B are used in proportions such that the metals A and B are present in the catalyst, each at a concentration of from 10 ppm to 10%, by weight relative to the porous carrier.

6. A process according to any of claims 1 to 5 characterised in that the porous carrier includes at least one alumina.

7. A process according to any of claims 1 to 6, characterised in that the catalyst further comprises a substrate on which said carrier is deposited.

8. A process according to claim 7, characterised in that said substrate is a ceramic or metallic monolith.

9. A process according to any of claims 7 and 8, characterised in that said substrate is coated with the porous carrier before the metals A and B are deposited on the latter.

10. A process according to any of claims 7 and 8, characterised in that said substrate is coated with the porous carrier after the metals A and B are deposited on the latter.

11. A process according to any of claims 7 and 8, characterised in that the metal A is deposited on the porous carrier, then the substrate is coated with said porous carrier and the metal B is deposited on said porous carrier thus positioned.

12. A multi-metal catalyst comprising, in an active phase, at least one metal A and least one metal B, each selected from Group VIII and IB of the Periodic Table, deposited on a porous carrier, characterised in that it is prepared by a process according to any of claims 1 to 11.

13. A catalyst according to claim 12, characterised in that each of the metals A and B is present at a concentration of from 10 ppm to 10%, by weight relative to the porous carrier.

14. A catalyst according to claim 13, characterised in that said concentration is from 50 ppm to 2%.

15. A catalyst according to any of claims 12 to 14, characterised in that said metal A is selected from platinum and palladium, and that said metal B is different for said metal A and is selected from platinum, palladium and rhodium.

16. A catalyst according to claim 15, wherein the metal A is platinum and the metal B is rhodium, characterised in that the graph showing reduction at a programmed temperature in hydrogen has two maxima at approximately 200° and 260°C, and the infra-red spectrum after adsorption of carbon monoxide has a band at approximately 2084 cm-1.

17. The use of a catalyst according to any of claims 12 to 16, to catalyse conversion of pollutants in exhaust gases from internal combustion engines.

## FIG.1

## FIG.2

FIG.3